# EUROPÄISCHE PATENTANMELDUNG

(11) **EP 1 367 106 A1**
(43) Veröffentlichungstag der Anmeldung: **03.12.2003**
(21) Anmeldenummer: 03010348.5
(22) Anmeldetag: 08.05.2003
(51) Int. Cl.: C09J 7/02

(54) **Handeinreissbares Klebeband mit einer weiterreissbaren Folie als Trägermaterial**

(30) Priorität: 28.05.2002 DE 10223631
(71) Anmelder: tesa AG, 20253 Hamburg (DE)
(72) Erfinder: Hoelger, Christof-Gottfried, 77749 Hohberg (DE)

(57) **Zusammenfassung**

Klebeband mit einer quer zur Ablängrichtung weiterreißbaren Folie als Trägermaterial, auf die auf der einen Seite eine Klebemasse mit einem Flächengewicht von mindestens 40 g/m² beschichtet ist, und auf der auf der anderen, der Klebemasse gegenüberliegenden Seite ein Release vorhanden ist, wobei eine oder beide Längskanten des Klebebandes über den gesamten Bereich Einkerbungen mit einer Breite von weniger als 1000 µm und einer Tiefe kleiner 100 µm aufweisen, wobei die Einkerbungen unregelmäßig angeordnet und von unterschiedlicher Tiefe sind.

## Beschreibung

Die vorliegende Erfindung betrifft ein Klebeband mit einer weiterreißbaren Folie als Trägermaterial, auf die einseitig eine Klebemasse aufgetragen ist.

In Selbstklebebändern für allgemeine Anwendungen wie Fixieren, Bündeln, Markieren, Reparieren, Abdichten oder Verschließen ist die Verwendung von textilen Trägermaterialien gebräuchlich.

Wie beim beschichteten Gewebeklebeband tesa ® 4651 werden diese textilen Trägermaterialien vor allem zum Schutz vor Feuchtigkeit, aber auch aus optischen Gründen mit Polymerpasten beschichtet. Für die Beschichtung mit Polymerpasten ist ein Gewebe erforderlich, das durch eine hohe Zahl von Fäden in Kett- und Schußrichtung ein Durchschlagen der Polymerpaste verhindert. Gebräuchlich sind Fadenzahlen von 20 Fäden/cm für die Kette und 20 Fäden/cm für die Schußfäden aufwärts. Gewöhnlich werden Gewebe aus Zellwolle eingesetzt. Die Höchstzugkräfte liegen typischerweise bei 50 bis 100 N/cm. Das Gewebe in diesen Materialien sorgt für eine hohe Zugfestigkeit bei einer gleichzeitig guten Handeinreißbarkeit dieser Klebebänder bei der Applikation. Der Einsatz von Baumwolle kann die Handeinreißbarkeit bei gleicher Höchstzugkraft verbessern, allerdings ist die Herstellung der Baumwollgewebe in der Ausrüstung des Gewebes aufwendiger.

Gebräuchlich ist auch die bei den sogenannten Duct Tapes vorgenommene Kaschierung eines Gewebes, einer Folie und einer Klebmasse, wobei der Verbund des textilen Trägers mit der Folie durch die Klebmasse hergestellt wird. In diesen Fällen kann ein Gewebe mit einer deutlich geringeren Fadenzahl verwendet werden, zum Beispiel mit 7 Fäden/cm für die Kette und mit 2,5 Fäden/cm für den Schuß. Vorteile dieses Produktaufbaus sind vor allem die Herstellkosten. Die Notwendigkeit für ein dichtes und teureres Gewebe aufgrund der Beschichtbarkeit entfällt durch den Einsatz des Folienträgers. Diese Produktaufbauten haben Höchstzugkräfte von typischerweise 40 N/cm. Die Funktion des Gewebes in diesen Materialien besteht neben dem Beitrag zur Zugfestigkeit vor allem in der Handeinreißbarkeit dieser Klebebänder.
In einer weiteren gebräuchlichen Ausführung wird ein Laminat durch ein Gewebe auf einer Folie hergestellt, das dann mit Klebmasse beschichtet wird. In diesen Laminaten haftet der Gewebeträger direkt auf der Folie. Die Vorteile dieses direkten Verbundes im Vergleich zum oben beschriebenen kaschierten Verbund sind neben einer besseren Festigkeit des Laminates vor allem eine verbesserte Handeinreißbarkeit und sauberere Abrißkante des Klebebandes bei der Applikation.

Um die Verklebung auch auf den in den Anwendungen häufig auftretenden schwierigen rauhen oder leicht verschmutzten Untergründen zu ermöglichen, müssen diese Klebebänder einen hohen Klebmasseauftrag besitzen. Dieser beträgt für die Klebebänder mit textilen Trägern typischerweise 100 g/m² und mehr. In anderen Fällen kann ein so hoher Klebmasseauftrag zu einer starken Verklebung führen. In diesen Fällen ist eine ausreichende Trägerfestigkeit notwendig, um das Klebeband zu entfernen zu können.
Um bei den hohen Klebmasseaufträgen eine ausreichend leichte Abrollbarkeit des Klebebandes von der Rolle sicherzustellen, wird die der Trägerrückseite mit einem Releaselack beschichtet.

In allen diesen Produktaufbauten stellt der textile Träger einen großen Kostenblock dar. Dabei vereinigt das Gewebe die konkurrierenden Eigenschaften einer Höchstzugkraft einerseits, die für den Halt der Verklebung und die Lösung der Verklebung des Klebebandes ausreichend ist, und einer guten Handeinreißbarkeit andererseits.

Eine weitere Verbesserung der Handeinreißbarkeit von Geweben kann durch die Verwendung von Zackschnittmessern erreicht werden. Mit der DE 43 18 277 C1 ist die Verwendung von Zackenschnittmessern zum Längsschneiden von doppelseitig klebenden Selbstklebebändern mit PP-Trägern bekannt geworden, die insbesondere als Teppichverlegeband Verwendung finden.
Bevorzugt weisen die Zacken des Zackenschnittmessers eine Zackenhöhe von 0,3 bis 6 mm, insbesondere 0,4 bis 1 mm auf. Aufgrund der sich daraus ergebenden Zackung der Schnittkante erhöht sich die Handeinreißbarkeit des Klebebands.

Solche gezackten Kanten für die oben beschriebenen allgemeinen Anwendungen sind unerwünscht, wenn das Klebeband neben der reinen Verklebungsfunktion auch optischen Ansprüchen genügen soll.
Schließlich neigen die Rollen derartiger Klebebänder bei der Lagerung zur Verschmutzung und die Zackenschnittmesser sind technisch aufwendig herzustellen und somit auch die damit hergestellten Produkte teuer.

Aufgabe der Erfindung ist es, ein Klebeband mit einer Folie als Trägermaterial, auf die eine Klebemasse aufgetragen ist, zur Verfügung zu stellen, wobei das Klebeband die für Anwendung notwendigen konkurrierenden Eigenschaften der ausreichenden Höchstzugkraft und guten Handeinreißbarkeit vereint und die geschilderten Nachteile des Standes der Technik nicht aufweist.

Gelöst wird diese Aufgabe durch ein Klebeband, wie es im Hauptanspruch niedergelegt ist. Gegenstand der Unteransprüche sind vorteilhafte Weiterbildungen des Erfindungsgegenstands.

Demgemäß betrifft die Erfindung ein Klebeband mit einer quer zur Ablängrichtung weiterreißbaren Folie als Trägermaterial, auf die auf der einen Seite eine Klebemasse mit einem Flächengewicht von mindestens 40 g/m² beschichtet ist, und auf der auf der anderen, der Klebemasse gegenüberliegenden Seite ein Release vorhanden ist, wobei eine oder beide Längskanten des Klebebandes über den gesamten Bereich Einkerbungen aufweisen.

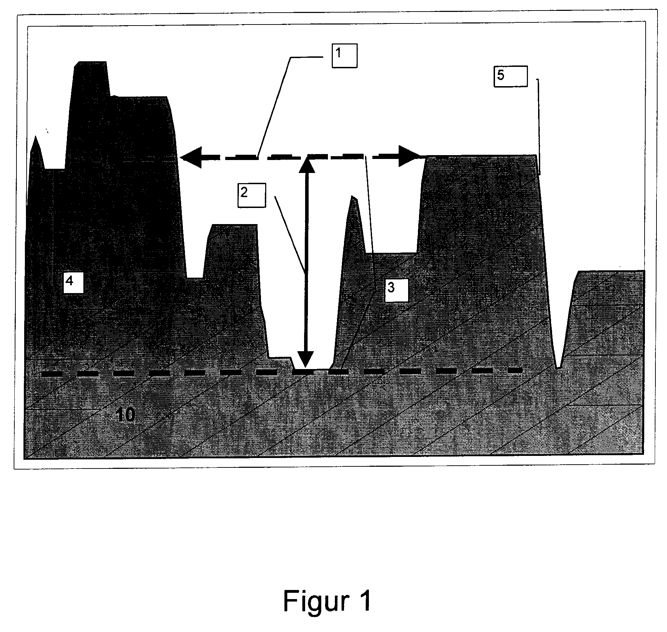

Eine Einkerbung im Randbereich des Klebebands 10, also an der Schnittkante 5, weist einen ungeraden, lokale Minima und lokale Maxima aufweisenden kurvenförmigen oder zackigen Verlauf auf und wird hier durch eine Breite 1 und einer dazugehörigen Tiefe 2 beschrieben (siehe Figur 1). Die Tiefe 2 einer Einkerbung wird hier als die Distanz zwischen zwei in Längsrichtung des Klebebandes parallel verlaufende Geraden bezeichnet, wovon die eine Gerade ein Minimum schneidet und die zweite ein Maximum. Bei einem gleichmäßig sinusförmigen Verlauf schneidet eine Gerade immer mehrere benachbarte lokale Minima 4 beziehungsweise Maxima.

Bei einem unregelmäßigem Verlauf ist dies normalerweise nicht der Fall, die Tiefe einer Einkerbung wird durch eine Gerade beschrieben, die nur durch ein einziges Maximum geht. Die von einer Einkerbung in Anspruch genommene Breite ist die Strecke zwischen den Schnittpunkten der Geraden durch ein Maximum einerseits und mit der Längskante des Klebebandes andererseits. Die Tiefe einer Einkerbung mit einer bestimmten Breite bezieht sich natürlich auf das Minimum mit der größten Distanz zwischen den Schnittpunkten.

Erfindungsgemäß weisen die Einkerbungen eine Breite von weniger als 1000 µm mit einer Tiefe von kleiner 100 µm auf, wobei die Einkerbungen unregelmäßig angeordnet und von unterschiedlicher Tiefe sind.

In einer ersten vorteilhaften Ausführungsform der Erfindung sind die Einkerbungen nur an einer der Längskanten vorhanden.

Weiter vorzugsweise sind größere und kleinere Einkerbungen vorhanden, wobei besonders bevorzugt die größeren Einkerbungen eine Tiefe von 15 bis 100 µm und die kleineren Einkerbungen eine Tiefe von 5 bis 15 µm aufweisen.

In einer weiteren vorteilhaften Ausführungsform der Erfindung sind die größeren Einkerbungen mit einer Häufigkeit von 1 bis 10 Stück/mm Kante und/oder die kleineren Einkerbungen mit einer Häufigkeit von 5 bis 30 Stück/mm Kante angeordnet.

Die Einkerbungen stellen eine verbesserte Handeinreißbarkeit in Querrichtung (bezogen auf Erstreckungsrichtung des Klebebands) sicher, ohne daß die für die Anwendung notwendige Stabilität eingeschränkt wird.
Das Klebeband ist sehr leicht von Hand abreißbar, was dem Verarbeiter ein Abreißen ohne hohen Kraftaufwand beziehungsweise ohne Zuhilfenahme von Hilfsmittel wie Schere oder Messer nach der Applikation ermöglicht. Dadurch ergibt sich eine erhebliche Zeitersparnis im Verarbeitungsprozeß.
Durch die Unregelmäßigkeit der Einkerbungen sind diese weniger sichtbar, als beispielsweise eine Kante, die im Zackenschnitt hergestellt worden ist.

Überraschend und für den Fachmann völlig unerwartet zeigt ein Klebeband mit einem Klebmasseauftrag größer 40 g/m² und einer Releasebeschichtung der gegenüberliegenden Trägerseite und mit einer weiterreißbaren Folie als Trägermaterial, das im Kantenbereich auf einer mikroskopischen Skala Einkerbungen mit einer Breite von kleiner 1000 µm und einer Tiefe von kleiner 100 µm aufweist, die benötigte Eigenschaftskombination von Handeinreißbarkeit, Trägerfestigkeit, Klebkraft und Abrollbarkeit.

Vorzugsweise werden als Material für die Folie BOPP, MOPP, PVC oder PET eingesetzt, die darüber hinaus in einer besonders vorteilhaften Ausführungsform der Erfindung eine Dicke von 30 bis 100 µm, insbesondere von 40 bis 70 µm, aufweist.
All diese aufgezählten Folien lassen sich als Trägerfolie erfindungsgemäß einsetzen. Eine vorteilhafte Ausführung der Erfindung stellt eine Folie dar, die farbig und/oder nicht transparent ist. Das bevorzugte Färben kann auch dadurch erfolgen, indem eine Einfärbung der Klebmasse, und/oder der Primermasse erfolgt.

In einer weiteren vorteilhaften Ausführungsform der Erfindung ist die Weiterreißkraft der Folie -beschrieben durch die Schenkelweiterreißkraft (EN ISO 13937-2 bei 100 mm/min Vorschubgeschwindigkeit) - vorteilhaft < 10N, insbesondere kleiner 1 N.

Sodann stellt eine hervorragende Ausgestaltung der Erfindung dar, wenn die Folie mit einer druckempfindlichen Klebemasse ausgerüstet ist.

In einer weiteren vorteilhaften Ausführungsform der Erfindung beträgt der Auftrag an Klebemasse mindestens 50 g/m², bevorzugt mindestens 80 g/m², ganz besonders bevorzugt 80 g/m² bis 120 g/m².

Die Klebemasse der erfindungsgemäßen Klebebänder kann eine Selbstklebemasse, die aus der Gruppe der Naturkautschuke oder der Synthesekautschuke oder aus einem beliebigen Blend aus Naturkautschuken und/oder Synthesekautschuken besteht, enthalten, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadin-Kautschuke (BR), der synthetischen Polyisoprene (IR), der Butyl-Kautschuke (llR), der halogenierten Butyl-Kautschuke (XllR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-lsopren-Styrol (SIS) und Styrol-Butadien-Styrol (SBS)-Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.
Zum Zwecke der thermisch induzierten chemischen Vernetzung sind alle vorbekannten thermisch aktivierbaren chemischen Vernetzer wie beschleunigte Schwefel- oder Schwefelspendersysteme, lsocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vernetzer kann auch durch IR-Strahlen oder hochenergetische Wechselfelder erfolgen.

Besonders vorteilhaft hat sich als Klebemasse eine solche auf Acrylathotmelt-Basis erwiesen, die einen K-Wert von mindestens 20 aufweist, insbesondere größer 30, erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird. Diesen auf diesem Wege hergestellten Acrylatmassen wird in einem Zwischenschritt das Lösungsmittel vollständig entzogen.
Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, daß diese einen hohen K-Wert und damit ein hohes Molekulargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.
Die Lösung der Masse kann 5 bis 80 Gew.-%, insbesondere 30 bis 70 Gew.-% Lösungsmittel enthalten.
Vorzugsweise werden handelsübliche Lösungsmittel eingesetzt, insbesondere niedrig siedende Kohlenwasserstoffe, Ketone, Alkohole und/oder Ester.
Weiter vorzugsweise werden Einschnecken-, Zweischnecken- oder Mehrschneckenextruder mit einer oder insbesondere zwei oder mehreren Entgasungseinheiten eingesetzt.
In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A1 beschrieben.
Die Klebemasse auf Acrylathotmelt-Basis kann aber auch chemisch vernetzt sein.
In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal ®, insbesondere Acronal ® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Gegebenenfalls kann rückseitig ein Trennlack zur Verbesserung der Abrollbarkeit aufgebracht werden.

In bestimmten Fällen kann umgekehrt eine Behandlung der Rückseite mit einer Corona oder einem Lack zur Verbesserung der Haftung einer Farbe auf der Rückseite vorgenommen werden.

Vorteilhaft ist die Verwendung einer Primerschicht zwischen Trägerfolie und Klebmasse zur Verbesserung der Haftung der Klebmasse auf der Folie und somit der rückstandsfreien Wiederabziehbarkeit nach der Anwendung.

Beschreibungen der üblicherweise für Klebebänder verwendeten Klebmassen sowie Trennlacken und Primern finden sich zum Beispiel im "Handbook of Pressure Sensitive Adhesive Technology" von Donatas Satas (van Nostrand, 1989).
Auf den Inhalt des besagten Handbuchs wird hiermit Bezug genommen, und dessen Inhalt wird Teil dieser Offenbarung und Erfindung.

Weiter vorzugsweise ist die Folie auf der Rückseite oder auf der Seite der Klebemasse bedruckt, insbesondere dann, wenn nur eine Längskante mit den Einkerbungen versehen ist, um beispielsweise den Benutzer des Klebebands auf die reißbare Kante hinzuweisen.

Das Klebeband besitzt eine hohe Klebkraft auch auf schwierigen Substraten, eine ausreichend hohe Zugfestigkeit (Höchstzugkraft), eine gute Dehnbarkeit (Reißdehnung), eine dosierte Klebkraft auf der eigenen Rückseite, eine geringe Dicke, eine hervorragende Wasserfestigkeit sowie eine exzellente Handeinreißbarkeit.

Insbesondere letztere ist durch die geeignete Wahl entsprechender Einkerbungen hervorragend optimiert.

Im folgenden soll die Erfindung anhand eines Beispieles erläutert werden, ohne die Erfindung unnötig einschränken zu wollen.

### Beispiel

Auf eine 50 µm dicke, transparente handelsübliche silikonisierte BOPP Folie wurde ein Primer aufgetragen. Im Anschluß wurde eine in Benzin dispergierte Kautschukklebemasse aufgetragen und das Benzin im anschließenden Trocknungsgang entfernt. Das Auftragsgewicht der Klebemasse betrug 95 g/m². Die Klebemasse bestand aus Naturkautschuk, einer Mischung von Harzen und Füllstoffen und Weichmachern und Additiven gegen Alterung. Ein Anteil von Ruß als Füllstoff sorgte für eine schwarze Färbung der Klebemasse, die auch die Farbe des Klebebandes bestimmt. Aus diesem Material wurden Rollen der Abmessung 50 m x 50 mm mit rauher Schnittkante hergestellt.

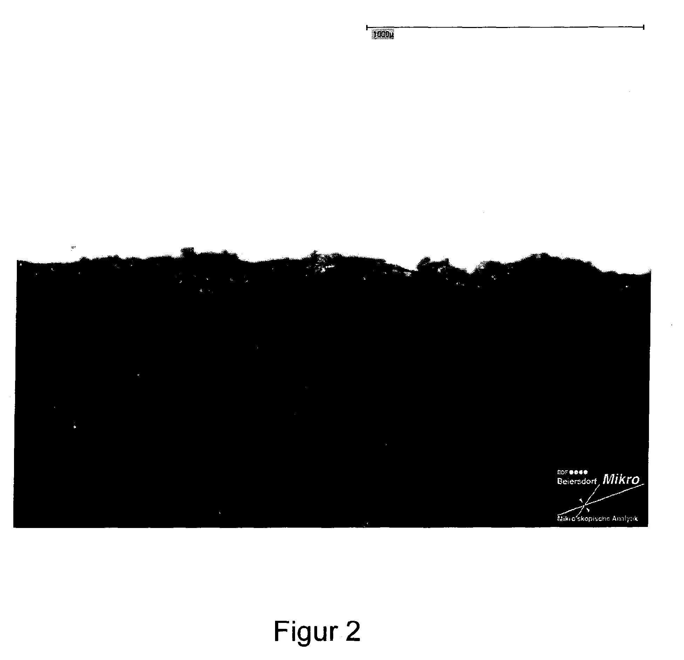

Einen mikroskopischen Ausschnitt der rauhen Schnittkante eines Klebebandes für allgemeine Anwendungen zeigt Figur 2.

Die Längen der Seitenkanten des Bildausschnittes betragen 2,25 x 1,85 mm. Das Abdeckband weist in dem gezeigten Abschnitt 5 Einkerbungen mit einer unterschiedlich ausgeprägten Tiefe kleiner 100 µm und größer 15 µm in unregelmäßigem Abstand sowie eine Vielzahl noch kleinerer Einkerbungen auf.

Das Material zeigte eine Klebkraft auf Stahl von 4,8 N/cm. Die Dicke des gesamten Abdeckbandes lag bei 140 µm, die Höchstzugkraft des Klebebandes bei einer Prüfgeschwindigkeit von 300 mm/min lag bei 47 N/15 mm, die Reißdehnung betrug 25 %, die Klebkraft auf der eigenen Rückseite bei 1,8 N/cm, die Abrollkraft bei einer Abzugsgeschwindigkeit von 30 m/min betrug 1,4 N/cm.

## Patentansprüche

1. Klebeband mit einer quer zur Ablängrichtung weiterreißbaren Folie als Trägermaterial, auf die auf der einen Seite eine Klebemasse mit einem Flächengewicht von mindestens 40 g/m² beschichtet ist, und auf der auf der anderen, der Klebemasse gegenüberliegenden Seite ein Release vorhanden ist, wobei eine oder beide Längskanten des Klebebandes über den gesamten Bereich Einkerbungen mit einer Breite von weniger als 1000 µm und einer Tiefe kleiner 100 µm aufweisen, wobei die Einkerbungen unregelmäßig angeordnet und von unterschiedlicher Tiefe sind.

2. Klebeband nach Anspruch 1, **dadurch gekennzeichnet, daß** die Einkerbungen nur an einer der Längskanten vorhanden sind.

3. Klebeband nach den Ansprüchen 1 oder 2, **dadurch gekennzeichnet, daß** größere und kleinere Einkerbungen vorhanden sind, wobei die größeren Einkerbungen eine Tiefe von 15 bis 100 µm und die kleineren Einkerbungen eine Tiefe von 5 bis 15 µm aufweisen.

4. Klebeband nach zumindest einem der Ansprüche 1 bis 3, **dadurch gekennzeichnet, daß** die größeren Einkerbungen mit einer Häufigkeit von 1 bis 10 Stück/mm Kante und/oder die kleineren Einkerbungen mit einer Häufigkeit von 5 bis 30 Stück/mm Kante angeordnet sind.

5. Klebeband nach zumindest einem der Ansprüche 1 bis 4, **dadurch gekennzeichnet, daß** die Weiterreißkräfte im Mittel kleiner 10 N, insbesondere kleiner 1 N, sind.

6. Klebeband nach zumindest einem der Ansprüche 1 bis 5, **dadurch gekennzeichnet, daß** als Material für die Folie PVC, BOPP, MOPP oder PET eingesetzt werden.

7. Klebeband nach zumindest einem der Ansprüche 1 bis 6, **dadurch gekennzeichnet, daß** die Folie eine Dicke von 30 bis 100 µm, insbesondere von 40 bis 70 µm, aufweist.

8. Klebeband nach zumindest einem der Ansprüche 1 bis 7, **dadurch gekennzeichnet, daß** die Klebemasse mit mindestens 50 g/m², bevorzugt mit mindestens 80 g/m², ganz besonders bevorzugt mit 80 g/m² bis 120 g/m², beschichtet ist.

9. Klebeband nach zumindest einem der Ansprüche 1 bis 8, **dadurch gekennzeichnet, daß** die Folie zur Verankerung der Farbmasse auf dem Träger mit einem Primer ausgerüstet ist.

10. Klebeband nach zumindest einem der Ansprüche 1 bis 9, **dadurch gekennzeichnet, daß** die Folie auf der Rückseite eine Bedruckung aufweist.

11. Klebeband nach zumindest einem der Ansprüche 1 bis 10, **dadurch gekennzeichnet, daß** das Klebeband zwischen der Folie und der Masseschicht eine Bedruckung aufweist.
